# EUROPÄISCHE PATENTSCHRIFT

(11) **EP 1 817 387 B1**
(45) Veröffentlichungstag und Bekanntmachung des Hinweises auf die Patenterteilung: **14.07.2010**
(21) Anmeldenummer: 05797328.1
(22) Anmeldetag: 25.10.2005
(51) Int. Cl.: C09D 183/16, C04B 35/589, C23C 18/12, C08G 77/62

(54) **VERWENDUNG VON POLYSILAZANEN ZUR BESCHICHTUNG VON METALLBÄNDERN**
USE OF POLYSILAZANES FOR COATING METAL STRIPS
UTILISATION DE POLYSILAZANES POUR LE REVETEMENT DE RUBANS METALLIQUES

(30) Priorität: 12.11.2004 DE 102004054661
(43) Veröffentlichungstag der Anmeldung: 15.08.2007
(73) Patentinhaber: Clariant Finance (BVI) Limited, Road Town, Tortola (VG)
(72) Erfinder: BRAND, Stefan, 69493 Hirschberg-Leutershausen (DE); DIERDORF, Andreas, 65179 Hofheim/Ts. (DE); LIEBE, Hubert, 65207 Wiesbaden (DE); WACKER, Andreas, 68165 Mannheim (DE)
(74) Vertreter: Jacobi, Carola
(86) Internationale Anmeldenummer: PCT/EP2005/011426
(87) Internationale Veröffentlichungsnummer: WO 2006/050813

(56) Entgegenhaltungen:
- WO-A-2004/039904
- US-A1- 2002 034 885
- US-B1- 6 329 487

## Beschreibung

Die vorliegende Erfindung betrifft die Verwendung von Polysilazanen zur Beschichtung von Metallbändern im Coil-Coating-Verfahren.

Dünne Metallbänder, zum Beispiel aus Aluminium, Stahl oder Zink werden üblicherweise im so genannten Coil-Coating-Verfahren beschichtet. Dabei werden Lacke über Walzen oder durch Aufsprühen auf das Metallband aufgetragen, der Lack in einer Trocknungsstrecke thermisch gehärtet und die beschichteten Bänder anschließend aufgerollt.
Die Anforderungen, die an solche Lacke gestellt werden, sind in erster Linie hohe mechanische Verformbarkeit, da die Metallbänder erst nach der Lackierung bearbeitet und in ihre spätere Form gebracht werden, sowie eine schnelle Härtung des Lackes bei hohen Temperaturen, da die Bänder mit hoher Geschwindigkeit durch die Coil-Coating-Anlagen gefahren werden. Die Härtung erfolgt typischerweise bei Ofentemperaturen von 200-350°C, wobei eine PMT (Peak Metal Temperature) von etwa 160-260°C erreicht wird (Römpp Lexikon Lacke und Druckfarben, Georg Thieme Verlag; Stuttgart, 1998).

Die üblicherweise beim Coil-Coating verwendeten Lacke bestehen aus organischen Bindemittelsystemen wie beispielsweise Polyester-, Epoxy-, Acryl-, Polyurethan- oder Fluorcarbonharzen, wobei teilweise zwei verschiedene Lacke als Grundierlack und als Decklack eingesetzt werden müssen, um die Anforderungen (vor allem im Bezug auf die Korrosionsbeständigkeit der Beschichtung) erfüllen zu können.

Ein Nachteil der bekannten Lacke ist die aufgrund ihres organischen Charakters nur bedingte Witterungsstabilität, so dass es vor allem bei Außenanwendungen mit der Zeit zum Abbau der Bindemittelmatrix kommt.

Ein weiterer Nachteil der bekannten Lacksysteme ist ihre geringe Kratzfestigkeit, da die Lacke möglichst flexibel sein sollen, um die Verarbeitung des Metallbandes zu ermöglichen.

Auch lässt die Chemikalienbeständigkeit der konventionellen Bindemittelsysteme zu wünschen übrig, wenn diese in Kontakt mit Lösemitteln oder mit sauren oder alkalischen Substanzen kommen, wie es sie Außenanwendungen z.B. durch sauren Regen oder durch Verschmutzung durch Vogelkot vorkommt.

Aus der Literatur ist bekannt, dass Polysilazanbeschichtungen Metalle vor Korrosion schützen können, jedoch sind bisher nur Verfahren zur Beschichtung bekannt, bei denen über einen längeren Zeitraum gehärtet werden muss, so dass diese sich nicht für das Coil-Coating Verfahren eignen.

JP 2001 172 795 beschreibt die oberflächliche Versiegelung von anodisch oxidiertem Aluminium mit einem Polysilazan, das durch Behandlung bei hoher Temperatur in eine Siliziumdioxid-Schicht umgewandelt wird. Im Beispiel 1 wird Aluminium mit einem nicht näher spezifizierten Polysilazan durch Aufsprühen beschichtet, anschließend für 30 min bei 80°C getrocknet und danach 2 h bei 400°C kalziniert. Dieser langwierige Härtungsprozess und die hohe Temperatur macht das Verfahren als Coil-Coating-Beschichtung ungeeignet.

US-6,627,559 lehrt die Verwendung eines Beschichtungssystems aus Polysilazanen, die einen Korrosionsschutz gewährleisten. Dabei handelt es sich um mindestens zwei Schichten, die verschiedene Mischungen von Polysilazanen enthalten. Dabei ist es wichtig, das Mischungsverhältnis der Polysilazane und den Schichtaufbau aufeinander abzustimmen, so dass rissfreie Beschichtungen erhalten werden. In den beschriebenen Beispielen werden die Schichten durch Spin-Coating auf Stahlscheiben aufgebracht und nach dem Aufbringen einer Schicht für 1 h bei 300°C gehärtet. Ein solches Verfahren ist zum schnellen Beschichten von Metallen durch Coil-Coating nicht geeignet, da zum einen die Härtungsdauer zu lange ist und zum anderen ein mehrfacher Durchlauf durch die Beschichtungsanlage notwendig wäre.

WO 2004/039 904 beschreibt die Verwendung einer Polysilazanlösung zur Beschichtung von verschiedenen Untergründen. Dabei wird in den Beispielen 7 bis 13 auch die Herstellung einer Korrosionsschutzschicht auf Aluminium beschrieben. Die Applikation der Polysilazanlösung erfolgt durch Fluten und die Aushärtung der Beschichtung durch Erhitzen auf 120°C für 1 h. Somit ist dieses Verfahren nicht geeignet, um zur Coil-Coating-Beschichtung von Metallbändern eingesetzt zu werden.

Der vorliegenden Erfindung lag die Aufgabe zugrunde, eine Beschichtung für das Coil-Coating Verfahren zu entwickeln, die einen sehr guten Korrosionsschutz bietet, hoch licht- und witterungsbeständig ist und darüber hinaus das Verkratzen des Metalls verhindert.

Überraschenderweise wurde nun gefunden, dass mit Polysilazanen durch kurze Härtung bei hohen Temperaturen Coil-Coating-Beschichtungen in hoher-Qualität hergestellt werden können, die sehr hart, aber dennoch flexibel genug sind und auch bei mechanischer Beanspruchung eine sehr gute Haftung auf dem Metallband zeigen, die diese Anforderungen erfüllen.

Gegenstand der Erfindung ist daher eine Beschichtung zum Beschichten von Metallen nach dem Coil Coating Verfahren enthaltend eine Lösung eines Polysilazans oder eine Mischung von Polysilazanen der allgemeinen Formel 1

-(SiR'R"-NR"')ₙ- (1)

wobei R', R", R"' gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel und mindestens einen Katalysator, und die Polysilazanlösung 1-50 Gew.% des Polysilazans enthält.

Besonders geeignet sind dabei sind dabei solche Polysilazane, in denen R', R", R"' unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)-propyl, 3-(Trimethoxysilylpropyl) stehen.
In einer bevorzugten Ausführungsform werden Perhydropolysilazane der Formel 2 für die erfindungsgemäße Beschichtung verwendet 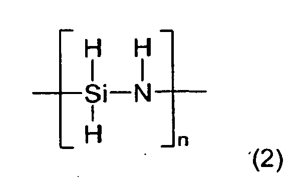 wobei es sich bei n um eine ganze Zahl handelt und n so bemessen ist, dass das Polysilazan ein zahlenmittleres Molekulargewicht von 150 bis 150.000 g/mol aufweist, sowie ein Lösemittel und einen Katalysator enthält.

In einer weiteren bevorzugten Ausführungsform enthält die erfindungsgemäße Beschichtung Polysilazane der Formel (3),

-(SiR'R"-NR"')ₙ-(SiR*R**-NR***)ₚ- (3)

wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei es sich bei n und p um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen
- R', R"' und R*** für Wasserstoff und R", R* und R** für Methyl stehen;
- R', R"' und R*** für Wasserstoff und R", R* für Methyl und R** für Vinyl stehen;
- R', R"', R* und R*** für Wasserstoff und R" und R** für Methyl stehen.

Ebenfalls bevorzugt werden ebenfalls Polysilazane der Formel (4) eingesetzt

-(SiR'R"-NR"')ₙ-(SiR*R**-NR***)ₚ-(SiR¹R²-NR³)_{q}- (4)

wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

Insbesondere bevorzugt sind Verbindungen in denen R', R"' und R*** für Wasserstoff und R", R*, R** und R² für Methyl, R³ für (Triethoxysilyl)propyl und R¹ für Alkyl oder Wasserstoff stehen.

Im allgemeinen beträgt der Anteil an Polysilazan im Lösemittel 1 bis 50 Gew.-% Polysilazans, bevorzugt 3 bis 30 Gew.-%, besonders bevorzugt 5 bis 20 Gew.-% enthält.

Als Lösemittel für die Polysilazanformulierung eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Weiterer Bestandteil der Polysilazanformulierung können Additive, die z.B. Viskosität der Formulierung, Untergrundbenetzung, Filmbildung oder das Ablüftverhalten beeinflussen oder anorganische Nanopartikel wie beispielsweise SiO₂, TiO₂, ZnO, ZrO₂ oder Al₂O₃ sein.

Bei den verwendeten Katalysatoren kann es sich beispielsweise um organische Amine, Säuren, oder Metalle oder Metallsalze oder um Gemische dieser Verbindungen handeln.

Der Katalysator wird vorzugsweise in Mengen von 0,001 bis 10 %, insbesondere 0,01 bis 6 %, besonders bevorzugt 0,1 bis 3 % bezogen auf das Gewicht des Polysilazans eingesetzt.

Beispiele für Aminkatalysatoren sind Ammoniak, Methylamin, Dimethylamin, Trimethylamin, Ethylamin, Diethylamin, Triethylamin, n-Propylamin, Isopropylamin, Di-n-propylamin, Di-isopropylamin, Tri-n-propylamin, n-Butylamin, Isobutylamin, Di-n-butylamin, Di-isobutylamin, Tri-n-butylamin, n-Pentylamin, Di-n-pentylamin, Tri-n-pentylamin, Dicyclohexylamin, Anilin, 2,4-Dimethylpyridin, 4,4-Trimethylenbis-(1-methylpiperidin), 1,4-diazabicyclo[2.2.2]octan, N,N-Dimethylpiperazin, cis-2,6-Dimethylpiperazin, trans-2,5-Dimethylpiperazin, 4,4-Methylenbis(cyclohexylamin), Stearylamin, 1,3-di-(4-Piperidyl)propan, N,N-Dimethylpropanolamin, N,N-Dimethylhexanolamin, N,N-Dimethyloctanolamin, N,N-Diethylethanolamin, 1-Piperidinethanol, 4-Piperidinol.

Beispiele für organische Säuren sind Essigsäure, Propionsäure, Buttersäure, Valeriansäure, Capronsäure.

Beispiele für Metalle und Metallverbindungen als Katalysatoren sind Palladium, Palladiumacetat, Palladiumacetylacetonat, Palladiumpropionat, Nickel, Nickelacetylacetonat, Silberpulver, Silberacetylacetonat, Platin, Platinacetylacetonat, Ruthenium, Rutheniumacetylacetonat, Rutheniumcarbonyle, Gold, Kupfer, Kupferacetylacetonat, Aluminiumacetylacetonat, Aluminiumtris(ethylacetoacetat).

Je nach verwendetem Katalysatorsystem kann die Gegenwart von Feuchtigkeit oder von Sauerstoff eine Rolle bei der Aushärtung der Beschichtung spielen. So kann durch Wahl eines geeigneten Katalysatorsystems die schnelle Härtung bei hoher oder niedriger Luftfeuchtigkeit bzw. bei hohem oder niederem Sauerstoffgehalt erreicht werden. Dem Fachmann sind diese Einflüsse bekannt und er wird durch geeignete Optimierungsmethoden die atmosphärischen Bedingungen entsprechend einstellen.

Weiterer Gegenstand der Erfindung ist ein Verfahren, bei dem Metallbänder mit einer Polysilazanlösung im Coil-Coating Verfahren beschichtet werden.

Das Coil-Coating Verfahren wird beispielsweise detailliert beschrieben in Römpp Lexikon Lacke und Druckfarben, Georg Thieme Verlag, Stuttgart, 1998. Auf diese Literaturstelle wird hiermit explizit Bezug genommen (incorporation by reference). Die Durchführung und Optimierung des Verfahrens sind dem Fachmann geläufig. Auf eine genauere Darstellung dieses Verfahrens wird daher im Zusammenhang mit der vorliegenden Erfindung verzichtet.

Schließlich sind die erfindungsgemäß beschichteten Metallbänder Gegenstand der Erfindung.

Die erfindungsgemäße Beschichtung auf Polysilazanbasis wird im üblichen Coil-Coating Verfahren appliziert, d.h. der Auftrag auf das Coil erfolgt entweder über eine Walze, durch Aufsprühen oder durch Beschichten in einem Tauchbad. Dabei kann der Auftrag entweder auf einer Seite des Coils oder gleichzeitig auf Vorder- und Rückseite erfolgen. Anschließend werden die Bänder einer Trocknungsstrecke zugeführt.

Vor dem Aufbringen der Beschichtung kann zunächst eine Primärschicht, die zur Verbesserung der Haftung der Polysilazanschicht auf dem Metallband beitragen kann, aufgebracht werden. Typische Primer sind solche auf Silanbasis wie beispielsweise 3-Aminopropyltriethoxysilan, 3-Glycidyloxypropyltriethoxysilane, 3-Mercaptopropyl-trimethoxysilane, Vinyltriethoxysilane, 3-Methacryloxypropyltrimethoxysilane, N-(2-Aminoethyl)-3-aminopropyltrimethoxysilane, Bis(3-triethoxysilylpropyl)amine, N-(n-Butyl)-3-aminopropyltrimethoxysilane, N-(2-aminoethyl)-3-aminopropyl-methyldimethoxysilane.

Polysilazane können bei hoher Temperatur in sehr kurzer Zeit gehärtet werden, so dass eine ausreichende Aushärtung in der Trocknungsstrecke gewährleistet ist. Da Polysilazane sehr temperaturbeständig sind, ist auch eine höhere Härtungstemperatur als bei konventionellen Lacksystemen möglich. Hier sind in der Regel erst durch die thermische Verformbarkeit des Metallbandes Grenzen gesetzt.

Die Härtung der Polysilazanbeschichtung im Coil-Coating Verfahren erfolgt vorzugsweise bei einer Ofentemperatur von 150 bis 500°C, bevorzugt 180 bis 350°C, besonders bevorzugt 200 bis 300°C. Die Trocknungsdauer beträgt üblicherweise 10 bis 120 Sekunden, abhängig von der Schichtdicke. Dabei wird je nach Dicke und Art des Metallbandes sowie Aufbau der Trocknungsstrecke eine Peak Metal Temperature (PMT) von 100 bis 400°C, bevorzugt 150 bis 300°C, besonders bevorzugt 200 bis 260°C erreicht.
Außer der Härtung durch konventionelle Trocknung ist auch die Verwendung von Trocknungsstrahlern basierend auf der IR- oder NIR-Technologie möglich. Dabei wird im Wellenlängenbereich von 12 bis 1,2 Mikrometer bzw. 1,2 bis 0,8 Mikrometer gearbeitet. Typische Strahlungsintensitäten liegen im Bereich von 5 bis 1000 kW/m².

Dem Beschichten mit der Polysilazanformulierung kann eine weitere Nachbehandlung folgen, mit der die Oberflächenenergie der Beschichtung angepasst wird. Damit können entweder hydrophile, hydrophobe oder oleophobe Oberflächen erzeugt werden, die die Verschmutzungsneigung beeinflussen.

Vorzugsweise eingesetzte Metalle zur Beschichtung sind beispielsweise Aluminium, Stahl, verzinkter Stahl, Zink, Magnesium, Titan oder Legierungen dieser Metalle. Dabei können die Metalle bzw. Metallbänder vorbehandelt sein, beispielsweise durch Chromatierung, chromatfreie Vorbehandlung, Anodisierung oder durch Bedampfen mit Metalloxidschichten.

Mit der erfindungsgemäßen Polysilazan-Beschichtung ist es möglich, einen sehr guten Korrosionsschutz zu erzielen, wobei eine deutlich dünnere Schicht als bei üblichen Coil-Coating Lacken ausreichend ist. Die ausgehärtete Polysilazanbeschichtung weißt üblicherweise eine Schichtdicke von 0,1 bis 10, bevorzugt 0,5 bis 5, besonders bevorzugt 1 bis 3 Mikrometer auf.
Der auf diese Weise reduzierte Materialverbrauch und ist ökologisch vorteilhaft, da die eingesetzte Menge an Lösemittel reduziert wird. Außerdem kann auf einen Grundierlack verzichtet werden, da bereits die dünne Polysilazanschicht eine ausreichend hohe Schutzwirkung verfügt.
Aufgrund des anorganischen Charakters der Beschichtung ist diese außergewöhnlich UV- und witterungsbeständig.

Die erfindungsgemäß beschichteten Coils können für die unterschiedlichsten Anwendungen, etwa im Baubereich, im Fahrzeugbau oder in der Herstellung von Haushaltsgeräten verwendet werden. Dies können zum Beispiel Decken- oder Wandelemente, Fensterprofile, Rollläden, Reflektoren, Karroseriebauteile oder Bauteile von Haushaltsgeräten sein.

### Beispiele

Bei den verwendeten Perhydropolysilazanen handelt es sich um Produkte der Fa. Clariant Japan K.K. Verwendetes Lösemittel ist Di-n-butylether (Bezeichnung NL). Die Lösung enthält (0,75 Gew.-%) Palladiumpropionat bezogen auf das Perhydropolysilazan als Katalysator.

Die Aushärtungsbedingungen in den Beispielen wurden so gewählt, dass sie mit denen in einer Coil-Coating-Anlage vergleichbar sind.

In den folgenden Beispielen sind Teile und Prozentangaben auf das Gewicht bezogen.

### Beispiel 1 (Beschichtung eines Aluminiumbleches)

Ein Aluminiumblech mit einer Dicke von 0,5 mm wird in eine Tauchapparatur, die mit einer 20 %igen Perhydropolysilazanlösung NL120A-20 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 250°C vorgeheizt wurde, gebracht und dort für 60 Sekunden belassen. Dabei wird eine Peak Metal Temperature (PMT) von 240°C erreicht. Nach dem Abkühlen resultiert eine klare, transparente und rissfreie Beschichtung.

### Beispiel 2 (Beschichtung eines Aluminiumbleches)

Ein Aluminiumblech mit einer Dicke von 0,5 mm wird in eine Tauchapparatur, die mit einer 10%igen Perhydropolysilazanlösung NL120A-10 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 250°C vorgeheizt wurde, gebracht und dort für 30 Sekunden belassen. Dabei wird eine Peak Metal Temperature (PMT) von 240°C erreicht. Nach dem Abkühlen resultiert eine klare, transparente und rissfreie Beschichtung.

### Beispiel 3: (Beschichtung eines eloxierten Aluminiumbleches)

Ein eloxiertes Aluminiumblech mit einer Dicke von 0,5 mm wird in eine Tauchapparatur, die mit einer 20%igen Perhydropolysilazanlösung NL120A-20 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 250°C vorgeheizt wurde, gebracht und dort für 60 Sekunden belassen. Dabei wird eine Peak Metal Temperatur (PMT) von 240°C erreicht. Nach dem Abkühlen resultiert eine klare, transparente und rissfreie Beschichtung.

### Beispiel 4: (Beschichtung eines oberflächenmodifizierten Aluminiumbleches)

Ein 0,5 mm dickes Aluminiumblech, auf dessen Oberfläche im Vorfeld eine TiO₂ und SiO₂ Oxidschicht aufgebracht wurde, wird in eine Tauchapparatur, die mit einer 20%igen Perhydropolysilazanlösung NL120A-20 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 250°C vorgeheizt wurde, gebracht und dort für 60 Sekunden belassen. Dabei wird eine Peak Metal Temperatur (PMT) von 240°C erreicht. Nach dem Abkühlen resultiert eine klare, transparente und rissfreie Beschichtung.

### Beispiel 5: (oberflächenmodifiziertes Aluminiumblech mit IR Aushärtung)

Ein 0,5 mm dickes Aluminiumblech, auf dessen Oberfläche im Vorfeld eine TiO₂ und SiO₂ Oxidschicht aufgebracht wurde, wird in eine Tauchapparatur, die mit einer 10 %igen Perhydropolysilazanlösung NL120A-20 (Clariant Japan) gefüllt ist, getaucht und mit einer Geschwindigkeit von 120 cm/min herausgezogen. Das Blech wird direkt nach der Beschichtung in einem IR Trockner (Wolframlampen) für 50 sec von der Unterseite bestrahlt. In dieser Zeit wird eine Peak Metal Temperatur (PMT) von 240°C erreicht. Nach dem Abkühlen resultiert eine klare, transparente und rissfreie Beschichtung.

### Beispiel 6 (Beschichtung eines Zinkbleches)

Ein Zinkblech mit einer Dicke von 0,8 mm wird in eine Tauchapparatur, die mit einer 10 %igen Perhydropolysilazanlösung NL120A-10 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 260°C vorgeheizt wurde, gebracht und dort für 30 Sekunden belassen. Dabei wird eine Peak Metal Temperature (PMT) von 230°C erreicht. Nach dem Abkühlen resultiert eine klare, transparente und rissfreie Beschichtung.

### Beispiel 7 (Beschichtung eines Zinkbleches)

Ein Zinkblech mit einer Dicke von 0,8 mm wird in eine Tauchapparatur, die mit einer 20 %igen Perhydropolysilazanlösung NL120A-20 (Clariant Japan) gefüllt ist, getaucht und mit einer Geschwindigkeit von 120 cm/min herausgezogen. Das Blech wird direkt nach der Beschichtung in einen Umlufttrockenschrank, der auf eine Temperatur von 260°C vorgeheizt wurde, gebracht und dort für 60 Sekunden belassen. Dabei wird eine Peak Metal Temperature (PMT) von 240°C erreicht. Nach dem Abkühlen resultiert eine klare, transparente und rissfreie Beschichtung.

### Beispiel 8 (Beschichtung eines Zinkbleches)

Ein Zinkblech mit einer Dicke von 0,8 mm wird in eine Tauchapparatur, die mit einem Gemisch aus einer 20 %igen Perhydropolysilazanlösung NL120A-20 (Clariant Japan) und einer 10 %igen Lösung eines Polymethylsilazans in Petroleumbenzin (hergestellt nach dem Verfahren beschrieben in Beispiel 1 in US 6,329,487) im Verhältnis 2,83:1 gefüllt ist, getaucht und mit einer Geschwindigkeit von 120 cm/min herausgezogen. Das Blech wird direkt nach der Beschichtung in einen Umlufttrockenschrank, der auf eine Temperatur von 260°C vorgeheizt wurde, gebracht und dort für 60 Sekunden belassen. Dabei wird eine Peak Metal Temperature (PMT) von 240°C erreicht. Nach dem Abkühlen resultiert eine klare, transparente und rissfreie Beschichtung.

### Beispiel 9 (Korrosionstest)

Die Korrosionsbeständigkeit der beschichteten Zinkbleche aus den Beispielen 3 bis 5 werden im Kondenswasser-Wechselklima-Test (KFW) nach ISO 6270-4 getestet. Nach einer Belastungsdauer von 25 Zyklen werden die Proben bewertet. Dabei ergeben sich folgende Resultate:

| Beispiel | Visuelle Beurteilung |
|---|---|
| 6 | keine Weißrostbildung |
| 7 | keine Weißrostbildung |
| 8 | keine Weißrostbildung |
| Zinkblech (unbeschichtet) | starke Weißrostbildung |

### Beispiel 10 (Bestimmung der Kratzfestigkeit)

Die Bestimmung der Kratzfestigkeit erfolgt durch mehrfache Belastung (fünf Doppelhübe) mit einer Stahlwolle vom Typ 00 und einer Kraft von 3 N. Dabei erfolgt die Bewertung der Verkratzung visuell nach folgender Skala: sehr gut (keine Kratzer), gut (wenige Kratzer), befriedigend (deutliche Kratzer), ausreichend (stark verkratzt) und mangelhaft (sehr stark verkratzt).

| Beispiel | Kratzfestigkeit |
|---|---|
| 1 | sehr gut |
| 2 | gut |
| 3 | gut |
| 4 | gut |
| 5 | gut |
| 6 | gut |
| 7 | sehr gut |
| 8 | befriedigend |
| Aluminiumblech (unbeschichtet) | mangelhaft |
| Zinkblech (unbeschichtet) | Ausreichend bis mangelhaft |

### Beispiel 11 (Haftfestigkeit)

Die Bestimmung der Haftung der Beschichtung erfolgt durch Gitterschnitt-Prüfung nach DIN EN ISO 2409, wobei die Haftung auf einer Skala von 0 (bester Wert) bis 5 (schlechtester Wert) erfolgt.

| Beispiel | Haftung |
|---|---|
| 1 | GT 0 |
| 2 | GT 0 |
| 3 | GT 0 |
| 4 | GT 0 |
| 5 | GT 0 |
| 6 | GT 0 |
| 7 | GT 0 |
| 8 | GT 0 |

## Patentansprüche

1. Beschichtung zum Beschichten von Metallen nach dem Coil-Coating-Verfahren enthaltend eine Lösung eines Polysilazans oder eine Mischung von Polysilazanen der allgemeinen Formel 1
-(SiR'R"-NR"')ₙ- (1)
wobei R', R", R"' gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel und mindestens einen Katalysator und die Polysilazanlösung 1 bis 50 Gew.-% des Polysilazans enthält.

2. Beschichtung gemäß Anspruch 1, **dadurch gekennzeichnet, dass** R', R", R"' unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)-propyl, 3-(Trimethoxysilylpropyl) stehen.

3. Beschichtung gemäß Anspruch 1 oder 2, **dadurch gekennzeichnet, dass** es sich bei dem Polysilazan um ein Perhydropolysilazan der Formel 2 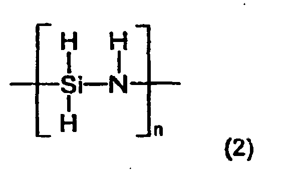 handelt.

4. Beschichtung gemäß Anspruch 1, **dadurch gekennzeichnet, dass** es sich bei dem Polysilazan der Formel (3) handelt,
-(SiR'R"-NR"')ₙ-(SiR*R**-NR***)ₚ- (3)
wobei R', R", R"', R*, R** und R*** unabhängig voneinander für Wasserstoff oder einen gegebenenfalls substituierten Alkyl-, Aryl-, Vinyl oder (Trialkoxysilyl)alkyl-Rest stehen, wobei es sich bei n und p um eine ganze Zahl handelt und n so bemessen ist, dass das Polysilazan ein zahlenmittleres Molekulargewicht von 150 bis 150.000 /mol aufweist.

5. Beschichtung gemäß Anspruch 4, **dadurch gekennzeichnet, dass**
- R', R"' und R*** für Wasserstoff und R", R* und R** für Methyl stehen;
- R', R"' und R*** für Wasserstoff und R", R* für Methyl und R** für Vinyl stehen; oder
- R', R"', R* und R*** für Wasserstoff und R" und R** für Methyl stehen.

6. Beschichtung gemäß Anspruch 1, **dadurch gekennzeichnet, dass** es sich bei dem Polysilazan der Formel (4) handelt,
-(SiR'R"-NR"')ₙ-(SiR*R**-NR***)ₚ-(SiR¹, R²-NR³)_{q}- (4)
wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei es sich bei n, p und q um eine ganze Zahl handelt und n so bemessen ist, dass das Polysilazan ein zahlenmittleres Molekulargewicht von 150 bis 150.000 g/mol aufweist.

7. Beschichtung gemäß Anspruch 6, **dadurch gekennzeichnet, dass** R', R"' und R*** für Wasserstoff und R", R*, R** und R² für Methyl, R³ für (Triethoxysilyl)propyl und R¹ für Akyl oder Wasserstoff stehen.

8. Beschichtung nach mindestens einem der vorhergehenden Ansprüche,, **dadurch gekennzeichnet, dass** die Perhydropolysilazanlösung 0,001 bis 10 Gew.-% eines Katalysators enthält.

9. Beschichtung nach Anspruch 9, **dadurch gekennzeichnet, dass** als Katalysatoren organische Amine, Säuren, Metalle, Metallsalze oder Gemische dieser Verbindungen eingesetzt werden.

10. Beschichtung nach mindestens einem der vorhergehenden Ansprüche, **dadurch gekennzeichnet, dass** als Lösemittel wasserfreie organische Lösemittel, die keine reaktiven Gruppen enthalten verwendet werden

11. Verfahren zur kontinuierlichen Beschichtung von Metallbändern nach dem Coil-Coating-Verfahren, **dadurch gekennzeichnet, dass** man eine Lösung enthaltend ein Polysilazan oder eine Mischung von Polysilazanen der Formel (1),
-(SiR'R"-NR"')ₙ- (1)
wobei R', R", R"' gleich oder unterschiedlich sind und entweder für Wasserstoff oder einen gegebenenfalls substituierten Alkyl-, Aryl- oder (Trialkoxysilyl)alkylRest stehen, wobei es sich bei n um eine ganze Zahl handelt und n so bemessen ist, dass das Polysilazan ein zahlenmittleres Molekulargewicht von 150 bis 150.000 g/mol aufweist, in einem Lösemittel und mindestens einen Katalysator auf einem Metallband aufbringt und die Beschichtung anschließend bei einer Temperatur von 150 bis 500°C oder durch Verwendung von IR- oder NIR-Strahlung härtet.

12. Metall oder Metallband, beschichtet mit einer Beschichtung gemäß mindestens einer der Ansprüche 1 bis 10.

13. Metall oder Metallband gemäß Anspruch 12, **dadurch gekennzeichnet, dass** es sich bei dem Metall um Legierungen von Aluminium, Stahl, verzinktem Stahl, Zink, Magnesium oder Titan handelt.

14. Metall oder Metallband gemäß Anspruch 12 und/oder 13, **dadurch gekennzeichnet, dass** das Metallband vor Aufbringen der Beschichtung durch Chromatierung, chromatfreie Vorbehandlung, Anodisierung oder durch Bedampfen mit Metalloxidschichten vorbehandelt wurde.

## Claims

1. A coating for coating metals according to the coil coating process, comprising a solution of a polysilazane or a mixture of polysilazanes of the formula 1
-(SiR'R"-NR"')ₙ- (1)
where R', R" and R"' are identical or different and independently of one another are hydrogen or an unsubstituted or substituted alkyl, aryl, vinyl or (trialkoxysilyl)alkyl radical, n being an integer and being such that the polysilazane has a number-average molecular weight of 150 to 150 000 g/mol, in a solvent and at least one catalyst, and the polysilazane solution contains 1% to 50% by weight of the polysilazane.

2. The coating as claimed in claim 1, **characterized in that** R', R", and R"' independently of one another are a radical from the group consisting of hydrogen, methyl, ethyl, propyl, isopropyl, butyl, isobutyl, tert-butyl, phenyl, vinyl, 3-(triethoxysilyl)propyl, and 3-(trimethoxysilyl)propyl.

3. The coating as claimed in claim 1 or 2, **characterized in that** the polysilazane is a perhydropolysilazane of formula 2

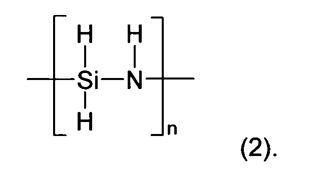

4. The coating as claimed in claim 1, **characterized in that** the polysilazane is of the formula (3)
-(SiR'R"-NR"')ₙ-(SiR*R**-NR***)ₚ- (3)
where R', R", R"', R*, R**, and R*** independently of one another are hydrogen or an unsubstituted or substituted alkyl, aryl, vinyl or (trialkoxysilyl)alkyl radical, n and p being integers and n being such that the polysilazane has a number-average molecular weight of 150 to 150 000 /mol.

5. The coating as claimed in claim 4, **characterized in that**
- R', R"', and R*** are hydrogen and R", R*, and R** are methyl;
- R', R"', and R*** are hydrogen, R" and R* are methyl, and R** is vinyl; or
- R', R"', R*, and R*** are hydrogen and R" and R** are methyl.

6. The coating as claimed in claim 1, **characterized in that** the polysilazane is of the formula (4)
-(SiR'R"-NR"')ₙ-(SiR*R**-NR-**)ₚ-(SiR¹,R²-NR³)_{q}- (4)
where R', R", R"', R*, R**, R***, R¹, R², and R³ independently of one another are hydrogen or an unsubstituted or substituted alkyl, aryl, vinyl or (trialkoxysilyl)alkyl radical, n, p and q being integers and n being such that the polysilazane has a number-average molecular weight of 150 to 150 000 g/mol.

7. The coating as claimed in claim 6, **characterized in that** R', R"', and R*** are hydrogen, R", R*, R**, and R² are methyl, R³ is (triethoxysilyl)propyl, and R¹ is alkyl or hydrogen.

8. The coating as claimed in at least one of the preceding claims, **characterized in that** the perhydropolysilazane solution contains 0.001 to 10% by weight of a catalyst.

9. The coating as claimed in claim 9, **characterized in that** catalysts used are organic amines, acids, metals, metal salts, or mixtures of these compounds.

10. The coating as claimed in at least one of the preceding claims, **characterized in that** solvents used are anhydrous organic solvents containing no reactive groups.

11. A process for continuously coating metal strips according to the coil coating process, **characterized in that** a solution comprising a polysilazane or a mixture of polysilazanes of the formula (1)
-(SiR'R"-NR"')ₙ- (1)
where R', R" and R"' are identical or different and independently of one another are hydrogen or an unsubstituted or substituted alkyl, aryl, or (trialkoxysilyl)alkyl radical, n being an integer and being such that the polysilazane has a number-average molecular weight of 150 to 150 000 g/mol, in a solvent and at least one catalyst is applied to a metal strip and then the coating is cured at a temperature of 150 to 500°C or by using IR or NIR radiation.

12. A metal or a metal strip coated with a coating as claimed in at least one of claims 1 to 10.

13. The metal or metal strip as claimed in claim 12, **characterized in that** the metal comprises alloys of aluminum, steel, galvanized steel, zinc, magnesium or titanium.

14. The metal or metal strip as claimed in claim 12 and/or 13, **characterized in that** prior to application of the coating the metal strip has been pretreated by chromating, chromate-free pretreatment, anodizing or vapor deposition with metal oxide films.

## Revendications

1. Revêtement destiné au revêtement de métaux selon le procédé de Coil-Coating contenant une solution d'un polysilazane ou un mélange de polysilazanes de formule générale 1
-(SiR'R"-NR"')ₙ- (1)
où R', R", R"' sont identiques ou différents et représentent, indépendamment l'un de l'autre, hydrogène ou un radical alkyle, aryle, vinyle ou (trialcoxysilyl)alkyle le cas échéant substitué, où il s'agit, pour n, d'un nombre entier et où n est dimensionné de manière telle que le polysilazane présente un poids moléculaire numérique moyen de 150 à 150 000 g/mole, dans un solvant et au moins un catalyseur et la solution de polysilazane contient 1-50% en poids du polysilazane.

2. Revêtement selon la revendication 1, **caractérisé en ce que** R', R", R"' représentent, indépendamment l'un de l'autre, un radical du groupe formé par l'hydrogène, méthyle, éthyle, propyle, iso-propyle, butyle, iso-butyle, tert-butyle, phényle, vinyle ou 3-(triéthoxysilyl)-propyle, 3-(triméthoxysilylpropyle).

3. Revêtement selon la revendication 1 ou 2, **caractérisé en ce qu'**il s'agit, pour le polysilazane, d'un perhydropolysilazane de formule 2

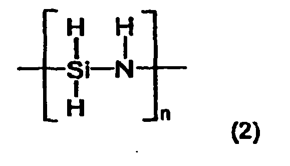

4. Revêtement selon la revendication 1, **caractérisé en ce qu'**il s'agit, pour le polysilazane, de formule (3)
-(SiR'R"-NR"')ₙ-(SiR*R**-NR***)ₚ- (3)
où R', R", R"', R*, R** et R*** représentent, indépendamment l'un de l'autre, hydrogène ou un radical alkyle, aryle, vinyle ou (trialcoxysilyl)alkyle le cas échéant substitué, où il s'agit, pour n et p, d'un nombre entier et où n est dimensionné de manière telle que le polysilazane présente un poids moléculaire numérique moyen de 150 à 150 000 /mole.

5. Revêtement selon la revendication 4, **caractérisé en ce que**
- R', R"' et R*** représentent hydrogène et R", R* et R** représentent méthyle ;
- R', R"' et R*** représentent hydrogène et R", R* représentent méthyle et R** représente vinyle ; ou
- R', R"', R* et R*** représentent hydrogène et R" et R** représentent méthyle.

6. Revêtement selon la revendication 1, **caractérisé en ce qu'**il s'agit, pour le polysilazane, de formule (4)
-(SiR'R"-NR"')ₙ-(SiR*R**-NR***)ₚ-(SiR¹,R²-NR³)_{q}- (4)
où R', R", R"', R*, R** et R***, R¹, R² et R³ représentent, indépendamment l'un de l'autre, hydrogène ou un radical alkyle, aryle, vinyle ou (trialcoxysilyl)alkyle le cas échéant substitué, où il s'agit, pour n, p et q, d'un nombre entier et où n est dimensionné de manière telle que le polysilazane présente un poids moléculaire numérique moyen de 150 à 150 000 g/mole.

7. Revêtement selon la revendication 6, **caractérisé en ce que** R', R"' et R*** représentent hydrogène et R", R*, R** et R² représentent méthyle, R³ représente (triéthoxysilyl)propyle et R¹ représente alkyle ou hydrogène.

8. Revêtement selon au moins l'une quelconque des revendications susmentionnées, **caractérisé en ce que** la solution de perhydropolysilazane contient 0,001 à 10% en poids d'un catalyseur.

9. Revêtement selon la revendication 9, **caractérisé en ce qu'**on utilise, comme catalyseurs, des amines, des acides, des métaux, des sels métalliques organiques ou des mélanges de ces composés.

10. Revêtement selon au moins l'une quelconque des revendications susmentionnées, **caractérisé en ce qu'**on utilise, comme solvant, des solvants organiques anhydres, qui ne contiennent pas de groupes réactifs.

11. Procédé pour le revêtement continu de bandes métalliques selon le procédé de Coil-Coating, **caractérisé en ce qu'**on applique une solution, contenant un polysilazane ou un mélange de polysilazanes de formule (1),
-(SiR'R"-NR"')ₙ- (1)
où R', R", R"' sont identiques ou différents et représentent, soit hydrogène, soit un radical alkyle, aryle, vinyle ou (trialcoxysilyl)alkyle le cas échéant substitué, où il s'agit, pour n, d'un nombre entier et où n est dimensionné de manière telle que le polysilazane présente un poids moléculaire numérique moyen de 150 à 150 000 g/mole, dans un solvant et au moins un catalyseur, sur une bande métallique et on durcit ensuite le revêtement à une température de 150 à 500°C ou par utilisation d'un rayonnement IR ou NIR.

12. Métal ou bande métallique, revêtu(e) par un revêtement selon au moins l'une quelconque des revendications 1 à 10.

13. Métal ou bande métallique selon la revendication 12, **caractérisé**(e) en ce qu'il s'agit, pour le métal, d'alliages d'aluminium, d'acier, d'acier zingué, de zinc, de magnésium ou de titane.

14. Métal ou bande métallique selon la revendication 12 et/ou 13, **caractérisé** (e) en ce que la bande métallique a été prétraitée avant l'application du revêtement par chromisation, prétraitement sans chromate, anodisation ou par évaporation avec des couches d'oxyde de métal.
